(19) Europäisches Patentamt / European Patent Office / Office européen des brevets

(11) **EP 4 418 714 A1**

(12) **EUROPEAN PATENT APPLICATION**
published in accordance with Art. 153(4) EPC

(43) Date of publication:
**21.08.2024 Bulletin 2024/34**

(21) Application number: **22880394.6**

(22) Date of filing: **13.10.2022**

(51) International Patent Classification (IPC):
**H04W 16/22** $^{(2009.01)}$ **H04W 64/00** $^{(2009.01)}$

(52) Cooperative Patent Classification (CPC):
**H04W 16/22; H04W 64/00**

(86) International application number:
**PCT/CN2022/125210**

(87) International publication number:
**WO 2023/061458 (20.04.2023 Gazette 2023/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.10.2021 CN 202111205578**

(71) Applicant: **Vivo Mobile Communication Co., Ltd.
Dongguan, Guangdong 523863 (CN)**

(72) Inventors:
• JIA, Chenglu
  Dongguan, Guangdong 523863 (CN)
• WANG, Yuanyuan
  Dongguan, Guangdong 523863 (CN)
• SI, Ye
  Dongguan, Guangdong 523863 (CN)
• ZHUANG, Zixun
  Dongguan, Guangdong 523863 (CN)

(74) Representative: **Murgitroyd & Company
165-169 Scotland Street
Glasgow G5 8PL (GB)**

(54) **POSITIONING METHOD, TERMINAL, AND NETWORK SIDE DEVICE**

(57) This application relates to the technical field of communications, and discloses a positioning method, a terminal, and a network side device. The positioning method of embodiments of this application includes: determining and/or reporting, by a terminal, second information according to first information, where the first information includes a first positioning reference signal and/or a first target AI model, and the second information is used for the network side device to perform terminal positioning.

200

FIG. 2

EP 4 418 714 A1

**Description**

**CROSS-REFERENCE TO RELATED APPLICATIONS**

This application claims priority to Chinese Patent Application No. 202111205578.7 filed on October 15, 2021 in China, which is incorporated herein by reference in its entirety.

**TECHNICAL FIELD**

This application belongs to the technical field of communications, and particularly relates to a positioning method, a terminal, and a network side device.

**BACKGROUND**

With rapid development of an artificial intelligence (Artificial Intelligence, AI) technology, the artificial intelligence technology is widely applied to various fields, for example, a positioning solution based on the AI technology, and the like.

As for the positioning solution based on the AI technology, a core network usually deploys one AI positioning model for one or more adjacent cells, so that when signal measurement information sent by a terminal is received, the signal measurement information is inputted into the AI positioning model, and thus position estimation information of the terminal is obtained.

However, as for the positioning solution based on the AI technology, the core network deploys only one AI positioning model for one or more adjacent cells, and terminal positioning is completed only based on the signal measurement information sent by the terminal in a positioning process, so accuracy of terminal positioning is low.

**SUMMARY**

Embodiments of this application provide a positioning method, a terminal, and a network side device, which can at least solve the problem of low accuracy of terminal positioning.

In a first aspect, a positioning method is provided and includes: determining and/or reporting, by a terminal, second information according to first information; where the first information includes a first positioning reference signal and/or a first target AI model, and the second information is used for a network side device to perform terminal positioning.

In a second aspect, a positioning method is provided and includes: receiving, by a network side device, second information sent by a terminal; and performing, by the network side device, terminal positioning according to a second target AI model and the second information.

In a third aspect, a positioning apparatus is provided and includes: an executive module, configured to determine and/or report second information according to first information; where the first information includes a first positioning reference signal and/or a first target AI model, and the second information is used for a network side device to perform terminal positioning.

In a fourth aspect, a positioning apparatus is provided and includes: a transmission module, configured to receive second information sent by a terminal; and a positioning module, configured to perform terminal positioning according to a second target AI model and the second information.

In a fifth aspect, a terminal is provided and includes a processor, a memory, and a program or instruction stored on the memory and executable on the processor, the program or the instruction, when executed by the processor, implementing steps of the method as described in the first aspect.

In a sixth aspect, a terminal is provided and includes a processor and a communication interface, where the communication interface is coupled to the processor, and the processor is configured to run a program or instruction to implement steps of the method as described in the first aspect.

In a seventh aspect, a network side device is provided and includes a processor, a memory, and a program or instruction stored on the memory and executable on the processor, the program or instruction, when executed by the processor, implementing steps of the method as described in the second aspect.

In an eighth aspect, a network side device is provided and includes a processor and a communication interface, where the communication interface is coupled to the processor, and the processor is configured to run a program or instruction to implement steps of the method as described in the second aspect.

In a ninth aspect, a readable storage medium is provided and stores a program or instruction, the program or instruction, when executed by a processor, implementing steps of the method as described in the first aspect or steps of the method as described in the second aspect.

In a tenth aspect, a chip is provided and includes a processor and a communication interface, where the communication interface is coupled to the processor, and the processor is configured to run a program or instruction to implement steps of the method as described in the first aspect or implement steps of the method as described in the second aspect.

In an eleventh aspect, a computer program/program product is provided and stored in a non-transitory storage medium and implements, when executed by at least one processor, steps of the method as described in the first aspect or steps of the method as described in the second aspect.

In the embodiments of this application, by deploying the first target AI model on the terminal and in combination with the first target AI model and/or the first positioning reference signal, determining and reporting of the second information related to terminal positioning are implemented, so that not only may a multi-AI-model fusion positioning solution be implemented, but also a variety of different pieces of terminal positioning information may be comprehensively considered, and thus accuracy of terminal positioning is improved.

## BRIEF DESCRIPTION OF THE DRAWINGS

FIG. 1 is a schematic structural diagram of a wireless communication system provided by an example of this application.
FIG. 2 is a schematic flowchart of a positioning method provided by an example of this application.
FIG. 3a is a schematic flowchart of a positioning method provided by another example of this application.
FIG. 3b is a schematic flowchart of interaction of a positioning method provided by an example of this application.
FIG. 4 is a schematic flowchart of a positioning method provided by another example of this application.
FIG. 5 is a schematic structural diagram of a positioning apparatus provided by an example of this application.
FIG. 6 is a schematic structural diagram of a positioning apparatus provided by another example of this application.
FIG. 7 is a schematic structural diagram of a terminal provided by an example of this application.
FIG. 8 is a schematic structural diagram of a network side device provided by an example of this application.

## DETAILED DESCRIPTION

The technical solutions in embodiments of this application will be clearly described in the following with reference to the accompanying drawings in the embodiments of this application. Apparently, the described embodiments are some rather than all of the embodiments of this application. All other embodiments obtained by those ordinarily skilled in the art based on the embodiments in this application fall within the protection scope of this application.

Terms such as "first" and "second" in the specification and claims of this application are used to distinguish similar objects, but are not used to describe a specific sequence or sequential order. It is to be understood that terms used in this way are exchangeable in a proper case, so that the embodiments of this application can be implemented in an order different from the order shown or described herein. Objects distinguished by "first" and "second" are usually of the same type, and the number of objects is not limited, for example, there may be one first object or a plurality of first objects. In addition, "and/or" used in this specification and the claims represents at least one of the connected objects, and the character "/" generally represents that associated objects in front of and behind it are in an "or" relationship.

It is worth noting that the technologies described in the embodiments of this application are not limited to an LTE-advanced system (LTE-Advanced, LTE-A) system of long term evolution (Long Term Evolution, LTE)/LTE, and may also be applied to other wireless communication systems, such as a code division multiple access (Code Division Multiple Access, CDMA), a time division multiple access (Time Division Multiple Access, TDMA), a frequency division multiple access (Frequency Division Multiple Access, FDMA), an orthogonal frequency division multiple access (Orthogonal Frequency Division Multiple Access, OFDMA), a single-carrier frequency-division multiple access (Single-carrier Frequency-Division Multiple Access, SC-FDMA) and other systems. Terms such as "system" and "network" in the embodiments of this application are frequently used interchangeably, and the described technologies may be not only used for the above-mentioned systems and a radio technology, but also used for other systems and radio technologies. The following description describes a new radio (New Radio, NR) system for the purpose of an example, an NR term is used in most of the following descriptions, but these technologies may also be applied to an application other than an NR system application, such as a 6th generation (6th Generation, 6G) communication system.

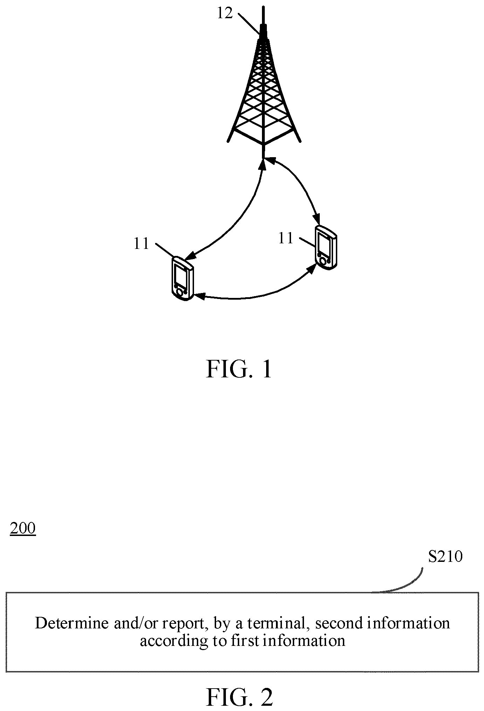

FIG. 1 shows a schematic structural diagram of a wireless communication system applicable to an embodiment of this application. The wireless communication system includes a terminal 11 and a network side device 12. The terminal 11 may also be called a terminal device or user equipment (User Equipment, UE) and may be a mobile phone, a tablet personal computer (Tablet Personal Computer), a laptop computer (Laptop Computer), or called a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), or vehicle user equipment (VUE), pedestrian user equipment (PUE) or other terminal side devices. The wearable device includes: a smart watch, a wristband, an ear phone, glasses and the like. It needs to be noted that, the specific type of the terminal 11 is not limited in the embodiments of this application. The network side device 12 may be a base station or a core network. The base station may be called NodeB, evolved NodeB, an access point, a base transceiver station (Base Transceiver Station, BTS), a radio base station, a radio transceiver, a basic service set (Basic Service Set, BSS), an extended service set (Extended Service Set, ESS), NodeB, evolved NodeB (Evolved Node B, eNB), home NodeB, home evolved NodeB, a wireless local area network (Wireless Local Area Network, WLAN) access point, a wireless fidelity (Wireless Fidelity, WiFi) node, a transmitting receiving point (Transmitting Receiving Point, TRP) or a certain proper one of other terms in the art. The base station is not limited to a specific technical term as long as the same technical effects are achieved. It needs to be noted that, a base station in the NR system is used only as an example in the embodiments of this application, but a specific type of the base station is not limited.

The technical solutions provided by the embodiments of this application are described in detail in the following through some embodiments and their application scenes with reference to the accompanying drawings.

As shown in FIG. 2, which is a schematic flowchart of a positioning method 200 provided by an example of this application. The method 200 may be executed by, but not limited to, a terminal, and may be executed specifically by hardware and/or software mounted in the terminal. In this embodiment, the method 200 may at least include the following steps.

S210: a terminal determines and/or reports second information according to first information.

The first information includes a first positioning reference signal and/or a first target AI model.

The first positioning reference signal (Positioning Reference Signal, PRS) may be sent by a network side device (such as a service base station and a core network device corresponding to the terminal). The terminal obtains positioning measurement information, channel characteristic information and the like by measuring the first positioning reference signal and then sends the measured information to the network side device, so as to assist the network side device in implementing accurate and efficient terminal positioning.

Optionally, the first positioning reference signal may include, but is not limited to, the PRS, a channel state information-reference signal (Channel State Information-Reference Signal, CSI-RS), a synchronization signal and PBCH block (Synchronization Signal and PBCH block, SSB) and the like.

The first target AI model may be implemented through protocol regulation, high-level configuration or network side configuration, so as to assist the network side device in implementing terminal positioning. It may be understood that the AI model has a powerful expression ability and is capable of processing a complicated nonlinear problem, a neural network of the AI model may be composed of a plurality of neurons, and basic parameters may include the number of network layers, the number of neurons, an activation function, a loss function and the like.

Certainly, in this embodiment, in order to implement efficient and reliable terminal positioning, as a possible implementation, this embodiment may utilize various AI models to implement terminal positioning in a manner of AI model fusion. Based on this, the first target AI model may include at least one of the following (11) to (13).

(11) A first AI model, which is used for obtaining predicted position information (namely, long-term statistics information of a position) according to historical position information, so that a temporal/spatial correlation of a terminal position is captured and a future position is predicted according to the correlation.

In other words, the first AI model may be understood as a position information timing prediction model, namely, a model input of the first AI model is position information of N past time slots (N is an integer greater than or equal to 0), and an output is predicted position information of M future time slots (M is an integer greater than or equal to 0), where N and M may be implemented through protocol regulation, high-level configuration and network configuration.

In an implementation, the historical position information may be understood as actual position information of the terminal in the N past time slots, and the historical position information may be cached in the terminal per se.

The predicted position information is estimated position information of the terminal in a future moment and may be obtained based on the first AI model and the historical position information. In an optional implementation, the predicted position information may be predicted position information of M time slots and the like. Based on this, in this embodiment, the predicted position information may include at least one of the following (111) to (113).

(111) Absolute position information. Optionally, the absolute position information may be, but is not limited to, predicted absolute position information of M time slots and the like.

(112) Relative position information. Optionally, the relative position information may include, but is not limited to, predicted relative position information of M future time slots and the like.

(113) Channel characteristic information related to terminal positioning. Optionally, the channel characteristic information includes at least one of the following (1131) to (1133).

(1131) Angle information related to a first channel. Optionally, the angle information may include, but is not limited to, an angle of arrival (Angle of Arrival, AoA), an angle of departure (Angle of Departure, AoD) and the like.

(1132) Delay information related to the first channel. Optionally, the delay information may include, but is not limited to, time of arrival (Time of Arrival, TOA), time difference of arrival (Time Difference of Arrival, TDOA), a reference signal time difference (Reference Signal Time Difference, RSTD), round-trip time (Round-trip Time, RTT), a mean excess delay, a root mean square delay spread and the like.

(1133) Path gain information related to the first channel. Optionally, the path gain information may include, but is not limited to, reference signal received power (Reference Signal Received Power, RSRP), a power delay profile (Power Delay Profile, PDP), path power information and the like.

It may be understood that the above-mentioned first channel may be a channel for transmitting the positioning reference signal, such as a physical downlink shared channel (Physical Downlink Shared Channel, PDSCH), a wireless physical downlink control channel (Physical Downlink Control Channel, PDCCH) and the like.

(12) A second AI model, which is used for determining current position information according to first positioning measurement information, so that a mapping relationship between the terminal position and a channel characteristic is captured, and thus the current position information is estimated according to measurement of a channel by the terminal.

In other words, the second AI model may be understood as a position information instant inference model, namely, a model input is first positioning measurement information (may also be understood as position measurement information or signal measurement information or the like) of the positioning reference signal sent by the terminal to a plurality of positioning base stations, and a model output is estimation of the current position information.

In an implementation, the first positioning measurement information may be a direct measurement quantity, such as channel state information (Channel State Information, CSI) obtained by measuring the first positioning reference signal by the terminal, may also be an indirect measurement quantity, such as information obtained by calculating the direct measurement quantity by the terminal, or information obtained by inputting the direct measurement quantity into a subsequent third AI model and performing channel characteristic extraction by the terminal, and may also be obtained by comprehensive calculation based on the direct measurement quantity and the indirect measurement quantity.

A specific obtaining mode of the first positioning measurement information may be determined through protocol regulation, high-level configuration, network side device configuration and the like, which is not limited here.

It needs to be noted that the first positioning reference signal and second positioning reference information mentioned in this embodiment may be the same or not, which is not limited here.

Optionally, in this embodiment, the first positioning measurement information (namely, a type of positioning measurement information) may include at least one of the following (1201) to (1211):

  (1201) a reference signal time difference;
  (1202) round-trip time;
  (1203) an angle of arrival;
  (1204) an angle of departure;
  (1205) reference signal received power;

  (1206) a time difference of arrival;
  (1207) time of arrival.
  (1208) a power delay profile;
  (1209) a mean excess delay;
  (1210) a root mean square delay spread; and
  (1211) a coherent bandwidth.

(13) The third AI model, which is used for determining channel characteristic information according to the second positioning measurement information so that the second positioning measurement information of the terminal is compressed, then a primary channel characteristic is extracted, and caching and feedback overhead is reduced.

In other words, the third AI model may be understood as a channel characteristic extraction model, namely, the channel characteristic information, such as angle information, delay information and path gain information, may be extracted according to the positioning measurement information by using the third AI model.

In an implementation, the second positioning measurement information may be a direct measurement quantity, such as CSI obtained by measuring the first positioning reference signal by the terminal, and may also be an indirect measurement quantity, such as information obtained by calculating the direct measurement quantity by the terminal, which is not limited in this embodiment. It needs to be noted that in this embodiment, the first positioning measurement information and the second positioning measurement information may be the same or not.

In another implementation, according to different pieces of the channel characteristic information, the third AI models may be different, for example, in a case that the channel characteristic information is the angle information, the third AI model may be a channel impulse response (Channel Impulse Response, CIR)-AOA channel characteristic extraction model, or a CIR-AOD channel characteristic extraction model, and the CIR-AOA channel characteristic extraction model and the CIR-AOD channel characteristic extraction model both extract AOA information and AOD information from the channel impulse response. In a case that the channel characteristic information is the delay information, the third AI model may be a CIR-TOA channel characteristic extraction model, and the CIR-TOA channel characteristic extraction model extracts TOA information from the channel impulse response. When the channel characteristic information is a plurality of pieces of information such as the delay information and the angle information, the third AI model may be composed of a plurality of sub-AI-models corresponding to the different pieces of information, which is not limited in this embodiment of this application.

It may be understood that compared with a solution for deploying one AI model only on a core network side in the related art, this application may further deploy the first target AI model on a terminal side, so as to implement a multi-AI-model fusion positioning solution, and thus accuracy of terminal positioning is improved.

Based on the above description of first information (such as the first positioning reference signal and the first target AI model), second information is determined and/or reported based on the first information and may be position information, positioning measurement information and the like sent by the terminal so as to be used for the network side device (such as the core network or the service base station) to perform terminal positioning, which is not limited in this embodiment.

In this embodiment, by deploying the first target AI model on the terminal and in combination with the first target AI model and/or the first positioning reference signal, determining and reporting of the second information related to terminal positioning are implemented, so that not only may a multi-AI-model fusion positioning solution be implemented, but also a variety of different pieces of terminal positioning information may be comprehensively considered, and thus accuracy of terminal positioning is improved.

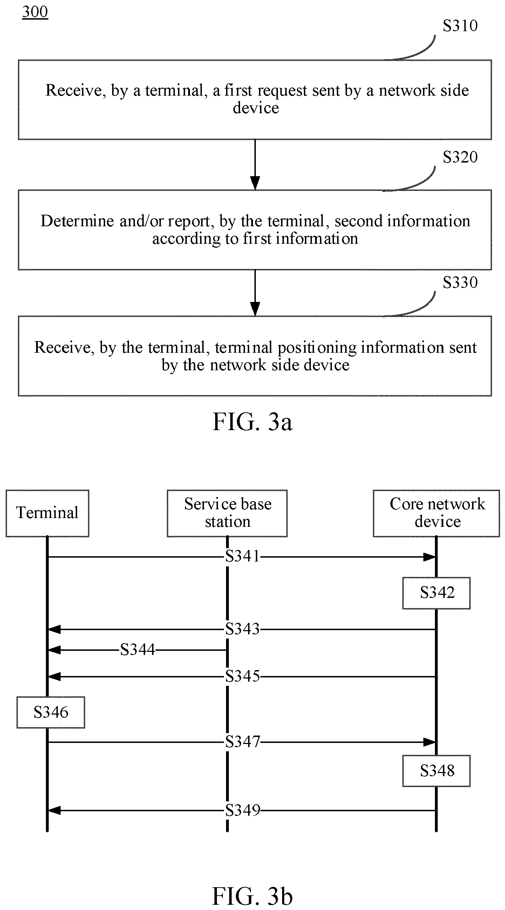

As shown in FIG. 3a, which is a schematic flowchart of a positioning method 300 provided by an example of this application. The method 300 may be executed by, but not limited to, a terminal, and may be executed specifically by hardware and/or software mounted in the terminal. In this embodiment, the method 300 may at least include the following steps.

S310, the terminal receives a first request sent by a network side device.

The first request is used for requesting the terminal for reporting the second information, such as at least one of the first position information determined based on the first target AI model, the third positioning measurement information and a type of the third positioning measurement information (such as a reference signal time difference, round-trip time, an angle of arrival, an angle of departure, reference signal received power, a time difference of arrival, time of arrival, a power delay profile, a mean excess delay, a root mean square delay spread and a coherent bandwidth). That is to say, the second information reported by the terminal may be implemented based on the first request sent by the network side device.

It may be understood that the related description of the first position information, the third positioning measurement information and the type of the third positioning measurement information may refer to the subsequent related description in S320. Besides, the third positioning measurement information may refer to the above related description of the first positioning measurement information and the second positioning measurement information, which is not described here in detail for avoiding repetitions.

In an implementation, a type of information (such as the first position information, the third positioning measurement information and the type of the third positioning measurement information) that the first request indicates the terminal to report may be indicated through the first request as described in S310, or may also be pre-configured in a manner of protocol regulation and the like, which is not limited here in this embodiment.

In addition, in another implementation, before executing S320, the terminal may further execute at least one of the following (21) to (22).

(21) The terminal reports a first identifier to the network side device.

The first identifier is related to the third positioning measurement information and used for assisting the network side device in determining a joint processing manner for the second information.

(22) The terminal reports a terminal calculation capacity to the network side device in a case that local position information prediction is determined to perform, so that the network side device may perform related deployment of a terminal positioning solution based on the terminal calculation capacity, for example, AI model deployment and the like, and thus subsequent terminal positioning is implemented. The terminal calculation capacity may be reported in a manner of a fourth identifier.

For example, the terminal may determine whether to perform local prediction (namely, the local position information prediction) according to its own terminal calculation capacity, and if local prediction is performed, the fourth identifier, such as "1", corresponding to the terminal calculation capacity is reported, so as to be used for reporting its own terminal calculation capacity to a core network device and the like.

Optionally, the terminal calculation capacity may at least include related information of an AI model supported by the terminal, such as an identifier, a type, effective time and the like of the AI model supported by the terminal.

In this case, as a possible implementation, the terminal, after reporting the terminal calculation capacity to the network side device, may further receive forth information sent by the network side device and capable of at least carrying information related to an AI model deployment manner. The fourth information (may also be understood as acknowledgment feedback information) may be understood as being determined according to terminal capability information, the identifier and the type of the AI model and the like in a case that the network side device receives the terminal capability information reported by the terminal.

Certainly, as an implementation, the fourth information may include at least one of the following (31) to (34).

(31) A fifth identifier, which is used for identifying the AI model deployment manner.

In this embodiment, the AI model deployment manner may include any one of the following (311) to (315).

(311) the first AI model being deployed on the terminal, and the second AI model being deployed on the network side device (such as a core network device side),

where, the first AI model is used for obtaining the predicted position information according to historical position information.

(312) both the first AI model and the second AI model being deployed on the network side device, where, the second AI model is used for determining the current position information according to the first positioning measurement information.

(313) the third AI model being deployed on the terminal side, and the second AI model being deployed on the network side device;

where, the third AI model is used for determining a channel characteristic according to the second positioning measurement information;

(314) both the third AI model and the second AI model being deployed on the network side device; and

(315) the first AI model, the second AI model and the third AI model being deployed on the network side device.

It may be understood that in the several above AI model deployment manners: as for the terminal side, if the first AI model is deployed on the terminal, the terminal has a timing prediction capability for its own future position information. That is to say, the terminal may predict the predicted position information of the M future time slots according to position information of the N past time slots and the first AI model and report the predicted position information of the M future time slots to the core network device. If the first AI model is not deployed on the terminal side, the terminal may report the position information of the N past time slots, where parameters N and M may be implemented through network dynamic configuration or static configuration in a manner of in-advance appointment.

Alternatively, if the second AI model is deployed on the terminal, the terminal may perform real-time position estimation (namely, the current position information) according to the third positioning measurement information reported by the terminal and the second AI model.

Alternatively, if the third AI model is deployed on the terminal, the terminal has a channel characteristic information extraction capability for the third positioning measurement information, namely, the terminal may extract the channel characteristic information according to the measured third positioning measurement information and the third AI model, and then report the channel characteristic information to the core network device.

As for the network device side, if the first AI model is deployed on the network side device, the network side device has a timing prediction capability for future position information of the terminal. For example, if the terminal reports the position information of the N past time slots, the core network device predicts the predicted position information of the terminal in the M future time slots according to the position information of the N past time slots reported by the terminal and the first AI model. If the terminal does not report the position information of the N past time slots, the core network device caches the historical position information of the terminal and predicts the predicted position information of the terminal in the M future time slots according to the position information of the N past time slots and the first AI model. It may be understood that options of the above two prediction manners of the future position information of the terminal by the network side device may be appointed in advance by the core network device and the terminal.

Alternatively, if the second AI model is deployed on the network side device, the core network device may perform real-time position estimation (namely, the current position information) according to the third positioning measurement information reported by the terminal and the second AI model.

Alternatively, if the third AI model is deployed on the network side device, the core network device has a channel characteristic information extraction capability for the positioning measurement information, namely, the core network device may extract the channel characteristic information according to the third positioning measurement information reported by the terminal and the third AI model.

Alternatively, if both the second AI model and the third AI model are deployed on the core network device, the core network device may first perform channel characteristic extraction on the third positioning measurement information reported by the terminal according to the third AI model, and then input the extracted channel characteristic information into the second AI model for estimation of the current position information.

It needs to be noted that the related description of the first AI model, the second AI model and the third AI model may refer to the related description in the above embodiment of the method 200, which is not described here in detail for avoiding repetitions. In addition, the network side device in the above (311) to (315) may be, but is not limited to, the core network device.

In this embodiment, for the sake of convenient recognizing the AI deployment manner and reducing signaling overhead, different AI deployment manners may correspond to different fifth identifiers, for example, the deployment manners in the above (311) to (315) correspond to an identifier 1, an identifier 2, an identifier 3, an identifier 4 and an identifier 5 respectively. Thus, accurate terminal positioning may be implemented subsequently based on the different AI models.

For another example, the fifth identifier '000' may mean that the network side device adopts the deployment manner (311), namely, the first AI model is deployed on the terminal side, and the second AI model is deployed on the core network device side.

Besides, it may be understood that the positioning method given in this application may include, but is not limited to, several AI model deployment manners given in the above (311) to (315).

(32) A second timestamp, which is determined time of the AI model deployment manners. That is to say, the second timestamp is time when the network side device determines or decides or selects the AI model deploy manner.

(33) Time synchronization information, which is used for ensuring that the AI models deployed on the terminal and the network side device share the same timestamp. For example, based on the time synchronization information, effective time/ineffective time of the AI models (or the AI model deployment manners) on the network side device and the terminal are the same or synchronous.

(34) AI model related information corresponding to the AI model deployment manner.

Optionally, the AI model related information may include at least one of the following (341) to (345).

(341) Model structure information. The model structure information may include the type of the AI model (such as a Gaussian process, a support vector machine and various neural network methods) and a structure of the model (such as the number of layers of a neural network, the number of neurons of each layer and an activation function).

(342) Model parameter information, namely, hyper-parameter configuration of the AI model, for example, the AI model needs a parameter, such as a related parameter in a kernel function, a related parameter in the activation function and a related parameter in a normalization layer, that is manually specified and is not updated with a data training process.

(343) A model data processing manner, namely, a data pre-processing manner before data are inputted into the AI model. Optionally, the model data processing manner may include, but is not limited to, normalization, upsampling, downsampling and the like.

(344) A model run cycle, namely, how often the AI model is executed once.

(345) A model updating cycle, namely, how often the AI model is updated once.

S320: the terminal determines and/or reports the second information according to the first information.

The first information includes the first positioning reference signal and/or the first target AI model, and the second information is used for the network side device to perform terminal positioning.

It may be understood that an implementation process of S320 may refer to the description of the above embodiment of the method 200, besides, as a possible implementation, the second information may include at least one of the following (41) to (43).

(41) The first position information, which includes position information corresponding to N time units before a current time unit, and/or, the predicted position information corresponding to M time units after the current time unit, where N and M are integers greater than or equal to 0 and may be implemented through protocol regulation, high-level configuration and network side configuration, which is not limited here.

(42) The third positioning measurement information, which is measurement information corresponding to the current time unit. Optionally, the third positioning measurement information (namely, a type of positioning measurement information) includes at least one of the following (4201) to (4211):

(4201) a reference signal time difference;
(4202) round-trip time;
(4203) an angle of arrival;
(4204) an angle of departure;
(4205) reference signal received power;
(4206) a time difference of arrival;
(4207) time of arrival;
(4208) a power delay profile;
(4209) a mean excess delay;
(4210) a root mean square delay spread; and
(4211) a coherent bandwidth.

Besides, the related description of the third positioning measurement information may refer to the above related description of the first positioning measurement information and the second positioning measurement information of the embodiment of the method 200, which is not described here in detail for avoiding repetitions.

(43) The first identifier, which is related to the third positioning measurement information and used for assisting the network side device in determining a joint processing manner for the second information. Optionally, the first identifier includes at least one of the following (431) to (433).

(431) The first timestamp, which is used for indicating obtaining time of the third positioning measurement information. For example, the first timestamp may be in which of time slots or which of frames the third positioning measurement information reported by the terminal is measured, so as to assist the network side device (such as the core network) in performing efficient fusion on the position information/positioning measurement information (such as the third positioning measurement information) reported by the terminal in different time and obtained from the different AI models, and thus accuracy of terminal positioning is improved.

(432) The second identifier, which is used for indicating whether the first position information (such as the relative position information or the absolute position information) is the historical position information or the predicted position information. For example, through protocol regulation or pre-configuration, "1" may represent the historical position information, "0" represents the predicted position information, so when the second identifier reported by the terminal is "1", the network side device may determine that the first position information is the historical position information, and when the second identifier reported by the terminal is "0", the network side device may determine that the first position information is the predicted position information.

Besides, as an implementation, the predicted position information and the historical position information may use the same timestamp information.

(433) The third timestamp, which is used for indicating the type of the third positioning measurement information. For this, this embodiment may adopt independent reporting or joint reporting to perform it. The independent reporting may be understood as: different pieces of third positioning measurement information/predicted position information, such as the third positioning measurement information of the first AI model (model) and the third AI model, different pieces of measurement information of the first AI model and different pieces of third positioning measurement information of the third AI model, of the different AI models may be independently reported in different periods of time respectively.

Optionally, the third identifier may include, but is not limited to, at least one of the following (4331) to (4333).

(4331) An information classification identifier: different information classification identifiers are added to different pieces of reported information respectively. For example, the first position information, the third positioning measurement information and the channel characteristic information may correspond to the different information classification identifiers respectively.

For example, the identifier "000" may represent the predicted position information of the first AI model, the identifier "001" may represent the third positioning measurement information corresponding to the third AI model, and the identifier "010" may represent the channel characteristic information of the third AI model, and the like.

(4332) An information joint processing identifier, which is used for representing a processing relationship among the first position information, the third positioning measurement information and the like reported in the different timestamps.

For example, the terminal reports, in time slots 1 and 2, the predicted position information obtained by the first AI model, and reports, in time slots 11 and 12, the channel characteristic information obtained by the third AI model, so an information joint processing identifier "00" may represent that the core network needs to perform joint processing on the information reported by the terminal in the time slots 1 and 11, and a joint processing identifier "01" may represent that the core network needs to perform joint processing on the information reported by the terminal in the time slots 1 and 12, and the like.

(4333) Joint reporting, which may be understood as: information (such as the third positioning measurement information and the first position information) corresponding to the different AI models may be reported together. Namely, the terminal reports, in continuous time slots, the information obtained by the different AI models, and a specific reporting manner may be appointed in advance by the core network and the terminal or may also be configured by the network side and the like, which is not limited here.

S330: The terminal receives the terminal positioning information sent by the network side device.

The terminal positioning information is determined according to the received second information and the second target AI model by the network side device. It may be understood that similar to the aforementioned first target AI model, the second target AI model may also include at least one of a first AI model, a second AI model and a third AI model. Correspondingly, when the plurality of AI models are deployed on the network side device, multi-AI-model terminal positioning may be performed for improving position accuracy, for example, positioning results of the plurality of AI models are fused.

It may be understood that the first AI model, the second AI model and the third AI model may refer to the above related description of the first target AI model, which is not described here in detail for avoiding repetitions.

In this embodiment, according to different AI model deployment manners, second target AI models adopted for determining the terminal positioning information by the network side device are different. For example, in this embodiment, it is assumed that the first AI model and/or the second AI model are/is deployed on the network side device, so a process that the network side device determines the terminal positioning information according to the second information and the second target AI model may include at least one of the following (51) to (53).

(51) In a case that the second information includes the historical position information and the predicted position information, and the first AI model is deployed on the network side device, the historical position information and the predicted position information are used as an input of the first AI model, so as to output first position prediction information, and the first position prediction information is determined as the terminal positioning information.

In other words, when only the first AI model is deployed on the network side device, and the second information includes the historical position information and the predicted position information, the first position prediction information may be used as final terminal positioning information.

It may be understood that the predicted position information included in the second information may be obtained by the terminal based on the first AI model.

(52) In a case that the second information includes the third positioning measurement information, and the second AI model is deployed on the network side device, the third positioning measurement information is used as an input of the second AI model, so as to output second position prediction information, and the second position prediction information is determined as the terminal positioning information.

In other words, when only the second AI model is deployed on the network side device, and the second information includes the third positioning measurement information, the second position prediction information may be used as final terminal positioning information.

It may be understood that the third positioning measurement information may be obtained by measuring the first positioning reference signal by the terminal.

(53) In a case that the second information includes the historical position information, the predicted position information and the third positioning measurement information, and both the first AI model and the second AI model are deployed on the network side device, fusion processing is performed on the first position prediction information and the second position prediction information to obtain the terminal positioning information.

In other words, in a case that both the first AI model and the second AI model are deployed on the network side device, and the second information includes the historical position information, the predicted position information and the third positioning measurement information, the network side device may perform fusion processing on the first position prediction information and the second position prediction information, and finally, a fusion processing result is used as final terminal positioning information.

Based on the above description, as a possible implementation, a fusion processing manner in which the network side device performs fusion processing on the first position prediction information and the second position prediction information may be determined according to fifth information. The fifth information may include at least one of the following (531) to (533).

(531) Movement state information of the terminal. The movement state information may include, but is not limited to, a movement speed, a movement acceleration speed, a movement direction and the like.

(532) Historical track information of the terminal. The historical track information may include, but is not limited to, position information in which the terminal is located in the past, information of a cell that the terminal accesses, and the like.

(533) Demand information of the terminal for positioning accuracy. The demand information of the positioning accuracy may be understood as whether the terminal needs high-accuracy positioning information and how high the positioning accuracy is demanded to be, and the like.

In an implementation, the fifth information may be reported by the terminal to the core network device periodically or non-periodically. The periodical reporting may be that the terminal reports the fifth information once at intervals of s time slots, where the parameter s is configured by a network; and the non-periodical reporting is that the above fifth information may report to be triggered by the terminal.

For example, for continuing the above description, it is assumed that the first position prediction information is p1, and the second position prediction information is p2, so the terminal positioning information p may be p = $g$(p1+p2, w), where w is a parameter set corresponding to the fifth information, and the parameter set includes, but is not limited to, the movement state information of the terminal, the historical track information of the terminal, the demand information of the terminal for the positioning accuracy, and the like. Based on this, an example of a fusion processing manner is given below.

The terminal positioning information p = up1+ ( 1-$u$) p2, $0 \le u \le 1$; where, $u$ represents a proportion of the position prediction information corresponding to the different first AI models. For example,

$$u = f(v_t) = \frac{v_t}{v_t + v}$$

is a calculating manner of an optional weight$^u$, where $v_t$ is a movement speed of the terminal in a time slot t, a parameter v is a speed threshold parameter appointed in advance by the network side device and the terminal, and $u$ is monotone increasing with respect to $v_t$, namely, the higher the movement speed of the terminal is, the higher the proportion of a result of the first AI model is.

As for the above content, the network side device may further feed terminal positioning information back to the terminal after determining the final terminal positioning information. In addition, it may be understood that the fusion processing manner may be that the terminal performs fusion on the first position prediction information and the second position information based on the specified AI model (such as the first AI model, the second AI model and the third AI model) to obtain terminal positioning information. Alternatively, the fusion processing manner may also be that the network side device performs fusion on the first position prediction information and the second position information by using other manners other than the AI model to obtain terminal positioning information, which is not limited in this embodiment.

In this embodiment, terminal positioning is performed based on a fusion AI model (such as the different AI model deployment manners), so that the accuracy of terminal positioning may be further improved.

Based on the above description of the positioning method 200 and/or 300, the implementation process of the positioning method is further described below with reference to FIG. 3b, contents of which are as follows. The network side device may include a service base station and a core network device.

S341: a terminal reports a terminal calculation capacity to the core network device.

S342: the core network device determines an AI model deployment manner based on the terminal calculation capacity.

S343: fourth information is sent to the terminal.

S344: in a positioning process, the service base station sends a first positioning reference signal to the terminal.

S345: the core network device sends a first request to the terminal so as to request the terminal for reporting second information.

S346: the terminal determines the second information according to the first positioning reference signal and/or a first target AI model in a case that the terminal receives the first request.

S347: the terminal reports the second information to the core network device.

S348: the core network device determines the terminal positioning information according to the received second information and a second target AI model.

S349: the core network device sends the terminal positioning information to the terminal.

It may be understood that the positioning process given in this application may include, but is not limited to, the above S341 to S349, for example, may include more or less steps than S341 to S349. Besides, the implementation process of S341 to S349 may refer to the related description of the above embodiment of the method 200 and/or 300 and achieve the same or corresponding technical effects, which is not described here in detail for avoiding repetitions.

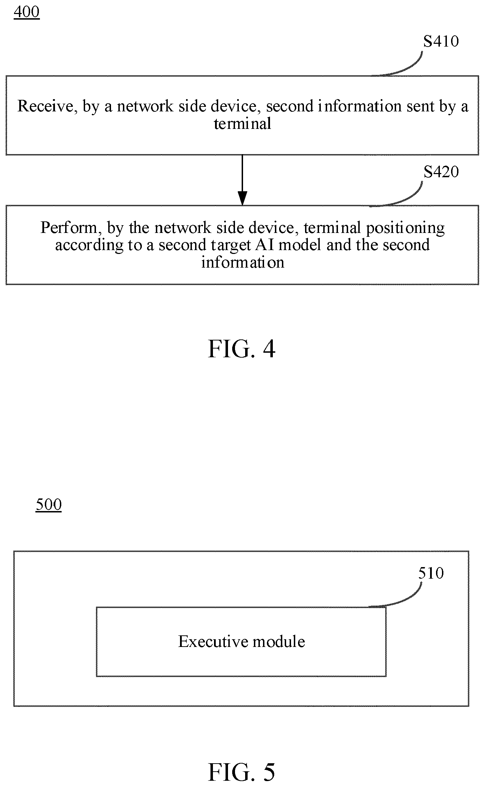

As shown in FIG. 4, which is a schematic flowchart of a positioning method 400 provided by an example of this application. The method 400 may be executed by, but not limited to, a network side device, and may be executed specifically by hardware and/or software mounted in the network side device. In this embodiment, the method 400 may at least include the following steps.

S410: the network side device receives second information sent by a terminal.

S420: the network side device performs terminal positioning according to a second target AI model and the second information.

In an optional implementation, the second information includes at least one of the following: first position information, which includes position information corresponding to N time units before a current time unit, and/or, predicted position information corresponding to M time units after the current time unit, where N and M are integers greater than or equal to 0; third positioning measurement information, which is measurement information corresponding to the current time unit; and a first identifier, which is related to the third positioning measurement information and used for assisting the network side device in determining a joint processing manner for the second information.

In an optional implementation, the third positioning measurement information includes at least one of the following: a reference signal time difference; round-trip time; an angle of arrival; an angle of departure; reference signal received power; a time difference of arrival; time of arrival; a power delay profile; a mean excess delay; a root mean square delay spread; and a coherent bandwidth.

As an optional implementation, the first identifier includes at least one of the following: a first timestamp, which is used for indicating obtaining time of the third positioning measurement information; a second identifier, which is used for indicating whether the first position information is historical position information or predicted position information; and a third identifier, which is used for indicating a type of the third positioning measurement information.

In an optional implementation, the second target AI model includes at least one of the following: a first AI model, which is used for obtaining the predicted position information according to the historical position information; a second AI model, which is used for determining current position information according to first positioning measurement information; and a third AI model, which is used for determining channel characteristic information according to second positioning measurement information.

In an optional implementation, the predicted position information includes at least one of the following: absolute position information; relative position information; and channel characteristic information related to terminal positioning.

As an optional implementation, the channel characteristic information includes at least one of the following: angle information related to a first channel; delay information related to the first channel; and path gain information related to the first channel; where the first channel is a channel for transmitting a second positioning reference signal.

In an optional implementation, in a case that the first AI model and the second AI model are deployed on the network side device, a step that the network side device performs terminal positioning according to the second target AI model and the second information includes at least one of the following: in a case that the second information includes the historical position information and the predicted position information, and the first AI model is deployed on the network side device, using the historical position information and the predicted position information as an input of the first AI model so as to output first position prediction information, and determining the first position prediction information as the terminal positioning information; in a case that the second information includes the third positioning measurement information, and the second AI model is deployed on the network side device, using the third positioning measurement information as an input of the second AI model so as to output second position prediction information, and determining the second position prediction information as the terminal positioning information; and in a case that the second information includes the historical position information, the predicted position information and the third positioning measurement information, and both the first AI model and the second AI model are deployed on the network side device, performing fusion processing on the first position prediction information and the second position prediction information to obtain the terminal positioning information.

In an optional implementation, a fusion processing manner in which the network side device performs fusion processing on the first position prediction information and the second position prediction information may be determined according to at least one of the following: movement state information of the terminal; historical track information of the terminal; and demand information of the terminal for positioning accuracy.

In an optional implementation, before the step of receiving the second information, the method further includes at least one of the following: the network side device sending a first request to the terminal. The first request is used for requesting the terminal for reporting at least one of the first position information determined based on the first target AI model, the third positioning measurement information and a type of the third positioning measurement information.

In an optional implementation, before the step that the network side device performs terminal positioning according to the AI model and the second information, the method further includes at least one of the following: the network side device receiving the first identifier reported by the terminal; and the network side device receiving a terminal calculation capacity sent by the terminal.

In an optional implementation, the method 400 further includes: the network side device determining an AI model deployment manner according to the terminal calculation capacity in a case that the network side device receives the terminal calculation capacity; and the network side device sending fourth information to the terminal, where the fourth information at least carries information related to an AI model deployment manner.

In an optional implementation, the AI model deployment manner includes any one of the following: the first AI model being deployed on the terminal, and the second AI model being deployed on the network side device; both the first AI model and the second AI model being deployed on the network side device; the third AI model being deployed on the terminal, and the second AI model being deployed on the network side device; both the third AI model and the second AI model being deployed on the network side device; and the first AI model, the second AI model and the third AI model being deployed on the network side device. The first AI model is used for obtaining the predicted position information according to the historical position information; the second AI model is used for determining the current position information according to the first positioning measurement information; and the third AI model is used for determining a channel characteristic according to the second positioning measurement information.

In an optional implementation, the fourth information includes at least one of the following: a fifth identifier, which is used for identifying the AI model deployment manner; a second timestamp, which is determined time of the AI model deployment manner; time synchronization information, which is used for ensuring that the AI models deployed on the terminal and the network side device share the same timestamp; and AI model related information corresponding to the AI model deployment manner.

In an optional implementation, the AI model related information includes at least one of the following: model structure information; model parameter information; a model data processing manner; a model run cycle; and a model updating cycle.

It may be understood that the implementation process of the various above implementations given in the embodiment of the method 400 may refer to the related description of the above embodiment of the method 200 and/or 300 and achieve the same or corresponding technical effects, which is not described here in detail for avoiding repetitions.

It needs to be noted that, an executive body of the positioning methods 200 to 400 provided by the embodiments of this application may be a positioning apparatus or a control module which is in the positioning apparatus and is used for executing the positioning methods 200 to 400. In this embodiment of this application, the positioning apparatus provided by this embodiment of this application is described by taking the positioning apparatus executing the methods 200 to 400 as an example.

As shown in FIG. 5, which is a schematic structural diagram of a positioning apparatus 500 provided by an example of this application. The apparatus 500 includes: an executive module 510, configured to determine and/or report second information according to first information. The first information includes a first positioning reference signal and/or a first target AI model, and the second information is used for a network side device to perform terminal positioning.

In an optional implementation, the apparatus further includes a determining module, and the determining module is configured to determine the first information.

As an optional implementation, the first target AI model includes at least one of the following: a first AI model, which is used for obtaining predicted position information according to historical position information; a second AI model, which is used for determining current position information according to first positioning measurement information; and a third AI model, which is used for determining channel characteristic information according to second positioning measurement information.

In an optional implementation, the predicted position information includes at least one of the following: absolute position information; relative position information; and channel characteristic information related to terminal positioning.

As an optional implementation, the channel characteristic information includes at least one of the following: angle information related to a first channel; delay information related to the first channel; and path gain information related to the first channel; where the first channel is a channel for transmitting a second positioning reference signal.

In an optional implementation, the second information includes at least one of the following: first position information, which includes position information corresponding to N time units before a current time unit, and/or, predicted position information corresponding to M time units after the current time unit, where N and M are integers greater than or equal to 0; third positioning measurement information, which is measurement information corresponding to the current time unit; and a first identifier, which is related to the third positioning measurement information and used for assisting the network side device in determining a joint processing manner for the second information.

In an optional implementation, the third positioning measurement information includes at least one of the following: a reference signal time difference; round-trip time; an angle of arrival; an angle of departure; reference signal received power; a time difference of arrival; time of arrival; a power delay profile; a mean excess delay; a root mean square delay spread; and a coherent bandwidth.

As an optional implementation, the first identifier includes at least one of the following: a first timestamp, which is used for indicating obtaining time of the third positioning measurement information; a second identifier, which is used for indicating whether the first position information is historical position information or predicted position information; and a third identifier, which is used for indicating a type of the third positioning measurement information.

In an optional implementation, the executive module 510 is further configured to perform at least one of the following: the terminal reporting the first identifier to the network side device; and the terminal reporting a terminal calculation capacity to the network side device in a case that the local position information prediction is determined to perform.

In an optional implementation, whether to perform the local position information prediction is determined according to third information by the terminal, where the third information includes at least one of the following: the terminal calculation capacity; network indication information; and protocol regulation.

In an optional implementation, the terminal calculation capacity is reported through a fourth identifier.

In an optional implementation, the terminal calculation capacity at least includes information of an AI model supported by the terminal.

In an optional implementation, the executive module 510 is further configured to receive a first request sent by the network side device; where the first request is used for requesting the terminal for reporting the second information.

In an optional implementation, the executive module 510 is further configured to receive fourth information sent by the network side device; where the fourth information at least carries information related to an AI model deployment manner, and the AI model deployment manner is determined by the network side device according to the terminal calculation capacity.

In an optional implementation, the AI model deployment manner includes any one of the following: the first AI model being deployed on the terminal, and the second AI model being deployed on the network side device; both the first AI model and the second AI model being deployed on the network side device; the third AI model being deployed on the terminal side, and the second AI model being deployed on the network side device; both the third AI model and the second AI model being deployed on the network side device; and the first AI model, the second AI model and the third AI model being deployed on the network side device. The first AI model is used for obtaining the predicted position information according to the historical position information; the second AI model is used for determining the current position information according to the first positioning measurement information; and the third AI model is used for determining a channel characteristic according to the second positioning measurement information.

In an optional implementation, the fourth information includes at least one of the following: a fifth identifier, which is used for identifying the AI model deployment manner; a second timestamp, which is determined time of the AI model deployment manner; time synchronization information, which is used for ensuring that the AI models deployed on the terminal and the network side device share the same timestamp; and AI model related information corresponding to the AI model deployment manner.

In an optional implementation, the AI model related information includes at least one of the following: model structure information; model parameter information; a model data processing manner; a model run cycle; and a model updating cycle.

The positioning apparatus 500 in this embodiment of this application may be an apparatus, an apparatus or an electronic device with an operating system, or a component, an integrated circuit or a chip in the terminal. The apparatus or the electronic device may be a mobile terminal or a non-mobile terminal. For example, the mobile terminal may include, but is not limited to, types of the terminal 11 listed above, and the non-mobile terminal may be a server, a network attached storage (Network Attached Storage, NAS), a personal computer (personal computer, PC), a television (television, TV), a teller machine or a self-service machine or the like, which is not specifically limited in this embodiment of this application.

The positioning apparatus 500 provided by this embodiment of this application can implement various processes implemented in the method embodiment of FIG. 2 to FIG. 3a and achieve the same technical effect, which is not described here in detail for avoiding repetitions.

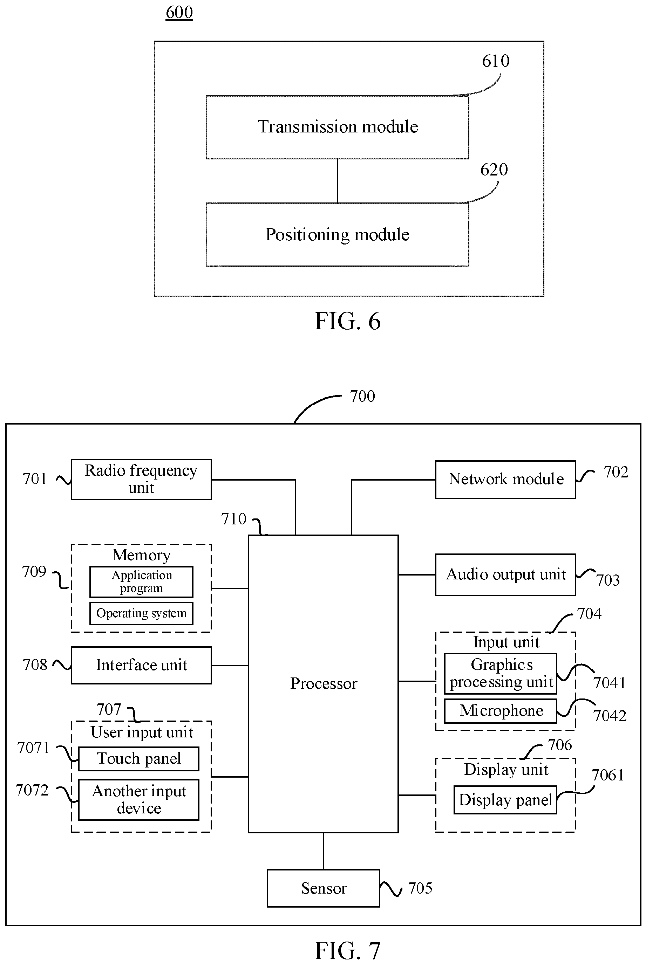

As shown in FIG. 6, which is a schematic structural diagram of a positioning apparatus 600 provided by an example of this application. The apparatus 600 includes: a transmission module 610, configured to receive second information sent by a terminal; and a positioning module 620, configured to perform terminal positioning according to a second target AI model and the second information.

In an optional implementation, the second information includes at least one of the following: first position information, which includes position information corresponding to N time units before a current time unit, and/or, predicted position information corresponding to M time units after the current time unit, where N and M are integers greater than or equal to 0; third positioning measurement information, which is measurement information corresponding to the current time unit; and a first identifier, which is related to the third positioning measurement information and used for assisting the network side device in determining a joint processing manner for the second information.

In an optional implementation, the third positioning measurement information includes at least one of the following: a reference signal time difference; round-trip time; an angle of arrival; an angle of departure; reference signal received power; a time difference of arrival; time of arrival; a power delay profile; a mean excess delay; a root mean square delay spread; and a coherent bandwidth.

As an optional implementation, the first identifier includes at least one of the following: a first timestamp, which is used for indicating obtaining time of the third positioning measurement information; a second identifier, which is used for indicating whether the first position information is historical position information or predicted position information; and a third identifier, which is used for indicating a type of the third positioning measurement information.

In an optional implementation, the second target AI model includes at least one of the following: a first AI model, which is used for obtaining predicted position information according to historical position information; a second AI model, which is used for determining current position information according to first positioning measurement information; and a third AI model, which is used for determining channel characteristic information according to second positioning measurement information.

In an optional implementation, the predicted position information includes at least one of the following: absolute position information; relative position information; and channel characteristic information related to terminal positioning.

As an optional implementation, the channel characteristic information includes at least one of the following: angle information related to a first channel; delay information related to the first channel; and path gain information related to the first channel; where the first channel is a channel for transmitting a second positioning reference signal.

In an optional implementation, the positioning module 620 is configured to perform at least one of the following: in a case that the second information includes the historical position information and the predicted position information, and the first AI model is deployed on the network side device, using the historical position information and the predicted position information as an input of the first AI model so as to output first position prediction information, and determining the first position prediction information as the terminal positioning information; in a case that the second information includes the third positioning measurement information, and the second AI model is deployed on the network side device, using the third positioning measurement information as an input of the second AI model so as to output second position prediction information, and determining the second position prediction information as the terminal positioning information; and in a case that the second information includes the historical position information, the predicted position information and the third positioning measurement information, and both the first AI model and the second AI model are deployed on the network side device, performing fusion processing on the first position prediction information and the second position prediction information to obtain the terminal positioning information.

In an optional implementation, a fusion processing manner in which the positioning module 620 performs fusion processing on the first position prediction information and the second position prediction information may be determined according to at least one of the following: movement state information of the terminal; historical track information of the terminal; and demand information of the terminal for positioning accuracy.

In an optional implementation, the transmission module 610 is further configured to send a first request to the terminal. The first request is used for requesting the terminal for reporting at least one of the first position information determined based on the first target AI model, the third positioning measurement information and a type of the third positioning measurement information.

In an optional implementation, the transmission module 610 is further configured to perform at least one of the following: the network side device receiving the first identifier reported by the terminal; and the network side device receiving a terminal calculation capacity sent by the terminal.

In an optional implementation, the positioning module 620 determines an AI model deployment manner according to the terminal calculation capacity in a case that the positioning module receives the terminal calculation capacity; and the transmission module 610 is further configured to send fourth information to the terminal, where the fourth information at least carries information related to the AI model deployment manner.

In an optional implementation, the AI model deployment manner includes any one of the following: the first AI model being deployed on the terminal, and the second AI model being deployed on the network side device; both the first AI model and the second AI model being deployed on the network side device; the third AI model being deployed on the terminal, and the second AI model being deployed on the network side device; both the third AI model and the second AI model being deployed on the network side device; and the first AI model, the second AI model and the third AI model being deployed on the network side device. The first AI model is used for obtaining the predicted position information according to the historical position information; the second AI model is used for determining the current position information according to the first positioning measurement information; and the third AI model is used for determining a channel characteristic according to the second positioning measurement information.

In an optional implementation, the fourth information includes at least one of the following: a fifth identifier, which is used for identifying the AI model deployment manner; a second timestamp, which is determined time of the AI model deployment manner; time synchronization information, which is used for ensuring that the AI models deployed on the terminal and the network side device share the same timestamp; and AI model related information corresponding to the AI model deployment manner.

In an optional implementation, the AI model related information includes at least one of the following: model structure information; model parameter information; a model data processing manner; a model run cycle; and a model updating cycle.

The positioning apparatus 600 in this embodiment of this application may be an apparatus, an apparatus or a network side device with an operating system, or a component, an integrated circuit or a chip in the network side device.

The positioning apparatus 600 provided by this embodiment of this application may implement the processes implemented by the method embodiment of FIG. 4 and achieve the same technical effect, which is not described here in detail for avoiding repetitions.

An embodiment of this application further provides a terminal, including a processor and a communication interface, where the communication interface is coupled to the processor, and the processor is configured to run a program or instruction to implement steps of the method in the embodiment of the method 200 and/or 300. The terminal embodiment corresponds to the method embodiment on the terminal side, and the implementation processes and the implementations of the above method embodiment are applicable to this terminal embodiment, which can achieve the same technical effects. Specifically, FIG. 7 is a schematic diagram of a hardware structure of a terminal for implementing embodiments of this application.

The terminal 700 includes, but is not limited to: at least a part of components such as a radio frequency unit 701, a network module 702, an audio output unit 703, an input unit 704, a sensor 705, a display unit 706, a user input unit 707, an interface unit 708, a memory 709 and a processor 710.

Those skilled in the art may understand that the terminal 700 may further include a power supply (such as a battery) for supplying power to the components. The power supply may be logically connected to the processor 710 by a power management system, thereby implementing functions such as charging, discharging, and power consumption management by using the power management system. A terminal structure shown in FIG. 7 constitutes no limitation on the terminal, and the terminal may include more or fewer components than those shown in the figure, or some components may be combined, or a different component arrangement may be used, which is not described here in detail.

It is to be understood that in this embodiment of this application, the input unit 704 may include a graphics processing unit (Graphics Processing Unit, GPU) 7041 and a microphone 7042. The graphics processing unit 7041 performs processing on image data of a static picture or a video that is obtained by an image capturing apparatus (for example, a camera) in a video capturing mode or an image capturing mode. The display unit 706 may include a display panel 7061. The display panel 7061 may be configured in the form of a liquid crystal display, an organic light-emitting diode, or the like. The user input unit 707 includes a touch panel 7071 and another input device 7072. The touch panel 7071 is also called a touch screen. The touch panel 7071 may include two parts: a touch detection apparatus and a touch controller. The another input device 7072 may include, but is not limited to, a physical keyboard, a functional key (such as a volume control key or a switch key), a track ball, a mouse, and a joystick, which is not described here in detail.

In this embodiment of this application, the radio frequency unit 701 receives downlink data from a network side device and then sends the downlink data to the processor 710 for processing. In addition, uplink data is sent to the network side device. Generally, the radio frequency unit 701 includes, but is not limited to, an antenna, at least one amplifier, a transceiver, a coupler, a low noise amplifier, a duplexer, and the like.

The memory 709 may be configured to store a software program or instruction and various data. The memory 709 may mainly include a program or instruction storage area and a data storage area. The program or instruction storage area may store an operating system, an application program or instruction required by at least one function (such as a sound playback function and an image display function), and the like. Besides, the memory 709 may include a high speed random access memory and may further include a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM) or a flash memory, such as, at least one magnetic disk storage device, a flash memory device or another non-volatile solid-state storage device.

The processor 710 may include one or more processing units. Optionally, the processor 710 may integrate an application processor and a modem processor, where the application processor mainly processes an operating system, a user interface, an application program or instruction, or the like, and the modem processor mainly processes wireless communication, such as a baseband processor. It may be understood that the above modem processor may not be integrated into the processor 710.

The processor 710 is configured to determine and/or report second information according to first information. The first information includes a first positioning reference signal and/or a first target AI model, and the second information is used for the network side device to perform terminal positioning.

In an optional implementation, the apparatus further includes a determining module, and the determining module is configured to determine the first information.

As an optional implementation, the first target AI model includes at least one of the following: a first AI model, which is used for obtaining predicted position information according to historical position information; a second AI model, which is used for determining current position information according to first positioning measurement information; and a third AI model, which is used for determining channel characteristic information according to second positioning measurement information.

In an optional implementation, the predicted position information includes at least one of the following: absolute position information; relative position information; and channel characteristic information related to terminal positioning.

As an optional implementation, the channel characteristic information includes at least one of the following: angle information related to a first channel; delay information related to the first channel; and path gain information related to the first channel; where the first channel is a channel for transmitting a second positioning reference signal.

In an optional implementation, the second information includes at least one of the following: first position information, which includes position information corresponding to N time units before a current time unit, and/or, predicted position information corresponding to M time units after the current time unit, where N and M are integers greater than or equal to 0; third positioning measurement information, which is measurement information corresponding to the current time unit; and a first identifier, which is related to the third positioning measurement information and used for assisting the network side device in determining a joint processing manner for the second information.

In an optional implementation, the third positioning measurement information includes at least one of the following: a reference signal time difference; round-trip time; an angle of arrival; an angle of departure; reference signal received power; a time difference of arrival; time of arrival; a power delay profile; a mean excess delay; a root mean square delay spread; and a coherent bandwidth.

As an optional implementation, the first identifier includes at least one of the following: a first timestamp, which is used for indicating obtaining time of the third positioning measurement information; a second identifier, which is used for indicating whether the first position information is historical position information or predicted position information; and a third identifier, which is used for indicating a type of the third positioning measurement information.

As an optional implementation, the processor 710 is further configured to perform at least one of the following: the terminal reporting the first identifier to the network side device; and the terminal reporting a terminal calculation capacity to the network side device in a case that local position information prediction is determined to perform.

In an optional implementation, whether to perform local position information prediction is determined according to third information by the terminal, where the third information includes at least one of the following: the terminal calculation capacity; network indication information; and protocol regulation.

In an optional implementation, the terminal calculation capacity is reported through a fourth identifier.

In an optional implementation, the terminal calculation capacity at least includes information of an AI model supported by the terminal.

In an optional implementation, the executive module is further configured to receive a first request sent by the network side device; where the first request is used for requesting the terminal for reporting the second information.

In an optional implementation, the processor 710 is further configured to receive fourth information sent by the network side device; where the fourth information at least carries information related to an AI model deployment manner, and the AI model deployment manner is determined by the network side device according to the terminal calculation capacity.

In an optional implementation, the AI model deployment manner includes any one of the following: the first AI model being deployed on the terminal, and the second AI model being deployed on the network side device; both the first AI model and the second AI model being deployed on the network side device; the third AI model being deployed on the terminal side, and the second AI model being deployed on the network side device; both the third AI model and the second AI model being deployed on the network side device; and the first AI model, the second AI model and the third AI model being deployed on the network side device. The first AI model is used for obtaining the predicted position information according to the historical position information; the second AI model is used for determining the current position information according to the first positioning measurement information; and the third AI model is used for determining a channel characteristic according to the second positioning measurement information.

In an optional implementation, the fourth information includes at least one of the following: a fifth identifier, which is used for identifying the AI model deployment manner; a second timestamp, which is determined time of the AI model deployment manner; time synchronization information, which is used for ensuring that the AI models deployed on the terminal and the network side device share the same timestamp; and AI model related information corresponding to the AI model deployment manner.

In an optional implementation, the AI model related information includes at least one of the following: model structure information; model parameter information; a model data processing manner; a model run cycle; and a model updating cycle.

In this embodiment of this application, by deploying the first target AI model on the terminal and in combination with the first target AI model and/or the first positioning reference signal, determining and reporting of the second information related to terminal positioning are implemented, so that not only may a multi-AI-model fusion positioning solution be implemented, but also a variety of different pieces of terminal positioning information may be comprehensively considered, and thus accuracy of terminal positioning is improved.

An embodiment of this application further provides a network side device, including a processor and a communication interface, where the communication interface is coupled to the processor, and the processor is configured to run a program or instruction to implement steps of the method 400 in the embodiment. This embodiment of the network side device corresponds to the above method embodiment of the network side device, and the implementation processes and the implementations of the above method embodiment are applicable to this embodiment of the network side device, which can achieve the same technical effects.

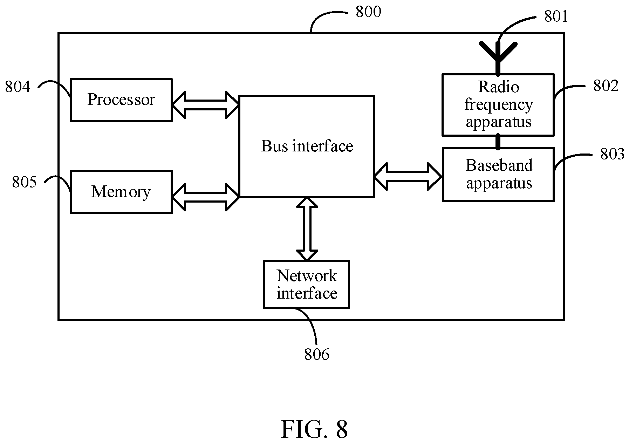

Specifically, an embodiment of this application further provides a network side device. As shown in FIG. 8, the network device 800 includes: an antenna 801, a radio frequency apparatus 802 and a baseband apparatus 803. The antenna 801 is connected to the radio frequency apparatus 802. In an uplink direction, the radio frequency apparatus 802 receives information through the antenna 801 and sends the received information to the baseband apparatus 803 for processing. In a downlink direction, the baseband apparatus 803 processes to-be-sent information and sends the information to the radio frequency apparatus 802, and the radio frequency apparatus 802 processes the received information and then sends the information via the antenna 801.

The above baseband processing apparatus may be located in the baseband apparatus 803, the method executed by the network side device in the above embodiment may be implemented in the baseband apparatus 803, and the baseband apparatus 803 includes a processor 804 and a memory 805.

The baseband apparatus 803 may include, for example, at least one baseband board, a plurality of chips are arranged on the baseband board, as shown in FIG. 8, one of the chips may be, for example, a processor 804, which is connected to the memory 805 to call a program in the memory 805 so as to execute operations of the network device shown in the above method embodiment.

The baseband apparatus 803 may further include a network interface 806, configured to exchange information with the radio frequency apparatus 802, and the interface is, for example, a common public radio interface (Common Public Radio Interface, CPRI).

Specifically, the network side device of this embodiment of the present disclosure further includes: an instruction or program stored on the memory 805 and executable on the processor 804. The processor 804 calls the instruction or program in the memory 805 to execute the method executed by the modules shown in FIG. 6, which achieves the same technical effects and is not described here in detail for avoiding repetitions.

An embodiment of this application further provides a readable storage medium, storing a program or instruction, the program or instruction, when executed by a processor, implementing the processes of the foregoing embodiment of the positioning method, which can achieve the same technical effects and is not described here in detail for avoiding repetitions.

The processor is a processor in the terminal in the above embodiment. The readable storage medium includes a computer-readable storage medium, for example, a computer read-only memory (Read-Only Memory, ROM).

An embodiment of this application further provides a chip, the chip includes a processor and a communication interface, the communication interface is coupled to the processor, and the processor is configured to run a program or instruction of the network side device to implement the processes of the embodiment of the above positioning method, which can achieve the same technical effects and is not described here in detail for avoiding repetitions.

It is to be understood that the chip mentioned in this embodiment of this application may also be called a system-level chip, a system chip, a chip system, a system-on-a-chip or the like.

An embodiment of this application further provides a computer program product, including a processor, a memory, and a program or instruction stored on the memory and executable on the processor, where the program or instruction, when executed by the processor, implements the processes of the embodiment of the positioning method, which can achieve the same technical effects and is not described here in detail for avoiding repetitions.

It needs to be noted that, the terms "include", "comprise", or any other variation thereof herein is intended to cover a non-exclusive inclusion, so that a process, a method, an item or an apparatus including a series of elements only include those elements, but also include other elements not listed clearly, or further includes elements inherent to the process, the method, the item or the apparatus. Without more limitations, an element defined by the sentence "including one" does not exclude that there are still other same elements in the process, method, item, or apparatus including the element. Besides, it needs to be noted that the scope of the method and the apparatus in implementations of this application is not limited to executing functions according to a shown or discussed sequence, it may also include that functions are executed in a basically simultaneously mode or in an opposite sequence according to the involved functions, for example, the described method may be executed in an order different from the described one, and various steps may also be added, omitted, or combined. In addition, features described with reference to some examples may be combined in other examples.

According to the descriptions in the foregoing implementations, those skilled in the art may clearly learn that the method according to the foregoing embodiment may be implemented by relying on software and a necessary general-purpose hardware platform or certainly by using hardware, but in most of cases, the former is a preferred implementation. Based on such an understanding, the technical solutions of this application essentially, or the part contributing to the prior art, may be presented in the form of a computer software product. The computer software product is stored in a storage medium (for example, an ROM/RAM, a magnetic disk, or an optical disc), including several instructions to enable a terminal (which may be a mobile phone, a computer, a server, an air-conditioner, a network device, or the like) to perform the methods described in the embodiments of this application.

The embodiments of this application have been described above with reference to the accompanying drawings. This application is not limited to the specific implementations described above, and the specific implementations described above are merely exemplary and not limitative. Those ordinarily skilled in the art may also make various variations under the revelation of this application without departing from the intention of this application and the protection scope of the claims, and such variations shall all fall within the protection scope of this application.

**Claims**

1.  A positioning method, comprising:

determining and/or reporting, by a terminal, second information according to first information; wherein the first information comprises a first positioning reference signal and/or a first target AI model, and the second information is used for a network side device to perform terminal positioning.

2.  The method according to claim 1, wherein the first target AI model comprises at least one of the following:

a first AI model, which is used for obtaining predicted position information according to historical position information; a second AI model, which is used for determining current position information according to first positioning measurement information; and a third AI model, which is used for determining channel characteristic information according to second positioning measurement information.

3.  The method according to claim 2, wherein the predicted position information comprises at least one of the following:

absolute position information; relative position information; and channel characteristic information related to terminal positioning.

4.  The method according to claim 2, wherein the channel characteristic information comprises at least one of the following:

angle information related to a first channel; delay information related to the first channel; and path gain information related to the first channel; wherein the first channel is a channel for transmitting a second positioning reference signal.

5.  The method according to claim 1, wherein the second information comprises at least one of the following:

first position information, which comprises position information corresponding to N time units before a current time unit, and/or, predicted position information corresponding to M time units after the current time unit, wherein N and M are integers greater than or equal to 0; third positioning measurement information, which is measurement information corresponding to the current time unit; and a first identifier, which is related to the third positioning measurement information and used for assisting the network side device in determining a joint processing manner for the second information.

6. The method according to claim 5, wherein the third positioning measurement information comprises at least one of the following:

a reference signal time difference;
round-trip time;
an angle of arrival;
an angle of departure;
reference signal received power;
a time difference of arrival;
time of arrival;
a power delay profile;
a mean excess delay;
a root mean square delay spread; and
a coherent bandwidth.

7. The method according to claim 5, wherein the first identifier comprises at least one of the following:

a first timestamp, which is used for indicating obtaining time of the third positioning measurement information;
a second identifier, which is used for indicating whether the first position information is historical position information or predicted position information; and
a third identifier, which is used for indicating a type of the third positioning measurement information.

8. The method according to claim 7, wherein before the step of reporting, by the terminal, the second information, the method further comprises at least one of the following:

reporting, by the terminal, the first identifier to the network side device; and
reporting, by the terminal, a terminal calculation capacity to the network side device in a case that local position information prediction is determined to perform.

9. The method according to claim 8, wherein whether to perform local position information prediction is determined by the terminal according to third information, wherein the third information comprises at least one of the following:

the terminal calculation capacity;
network indication information; and
protocol regulation.

10. The method according to claim 8, wherein the terminal calculation capacity is reported through a fourth identifier.

11. The method according to claim 8, wherein the terminal calculation capacity at least comprises information of an AI model supported by the terminal.

12. The method according to any one of claims 1 to 8, wherein before the step of reporting the second information, the method further comprises:

receiving, by the terminal, a first request sent by the network side device;
wherein the first request is used for requesting the terminal for at least reporting the second information.

13. The method according to any one of claims 1 to 8, wherein after the step of reporting the second information, the method further comprises:

receiving, by the terminal, fourth information sent by the network side device;
wherein the fourth information at least carries information related to an AI model deployment manner, and the AI model deployment manner is determined by the network side device according to the terminal calculation capacity.

14. The method according to claim 13, wherein the AI model deployment manner comprises any one of the following:

the first AI model being deployed on the terminal, and the second AI model being deployed on the network side device;
both the first AI model and the second AI model being deployed on the network side device;
the third AI model being deployed on the terminal side, and the second AI model being deployed on the network side device;
both the third AI model and the second AI model being deployed on the network side device; and
the first AI model, the second AI model and the third AI model being deployed on the network side device;
wherein the first AI model is used for obtaining the predicted position information according to the historical position information;
the second AI model is used for determining the current position information according to the first positioning measurement information; and
the third AI model is used for determining a channel characteristic according to the second positioning measurement information.

15. The method according to claim 13, wherein the fourth information comprises at least one of the following:

a fifth identifier, which is used for identifying the AI model deployment manner;

a second timestamp, which is determined time of the AI model deployment manner;

time synchronization information, which is used for ensuring that the AI models deployed on the terminal and the network side device share the same timestamp; and

AI model related information corresponding to the AI model deployment manner.

16. The method according to claim 15, wherein the AI model related information comprises at least one of the following:

model structure information;
model parameter information;
a model data processing manner;
a model run cycle; and
a model updating cycle.

17. A positioning method, comprising:

receiving, by a network side device, second information sent by a terminal; and
performing, by the network side device, terminal positioning according to a second target AI model and the second information.

18. The method according to claim 17, wherein the second information comprises at least one of the following:

first position information, which comprises position information corresponding to N time units before a current time unit, and/or, predicted position information corresponding to M time units after the current time unit, wherein N and M are integers greater than or equal to 0;

third positioning measurement information, which is measurement information corresponding to the current time unit; and

a first identifier, which is related to the third positioning measurement information and used for assisting the network side device in determining a joint processing manner for the second information.

19. The method according to claim 18, wherein the third positioning measurement information comprises at least one of the following:

a reference signal time difference;
round-trip time;
an angle of arrival;
an angle of departure;
reference signal received power;
a time difference of arrival;
time of arrival;
a power delay profile;

a mean excess delay;
a root mean square delay spread; and
a coherent bandwidth.

20. The method according to claim 18, wherein the first identifier comprises at least one of the following:

a first timestamp, which is used for indicating obtaining time of the third positioning measurement information;

a second identifier, which is used for indicating whether the first position information is historical position information or predicted position information; and

a third identifier, which is used for indicating a type of the third positioning measurement information.

21. The method according to claim 17, wherein the second target AI model comprises at least one of the following:

a first AI model, which is used for obtaining predicted position information according to historical position information;

a second AI model, which is used for determining current position information according to first positioning measurement information; and

a third AI model, which is used for determining channel characteristic information according to second positioning measurement information.

22. The method according to claim 21, wherein the predicted position information comprises at least one of the following:

absolute position information;
relative position information; and
channel characteristic information related to terminal positioning.

23. The method according to claim 21, wherein the channel characteristic information comprises at least one of the following:

angle information related to a first channel;
delay information related to the first channel; and
path gain information related to the first channel;
wherein the first channel is a channel for transmitting a second positioning reference signal.

24. The method according to claim 21, wherein the step of performing, by the network side device, terminal positioning according to the second target AI model and the second information comprises at least one of the following:

in a case that the second information comprises the historical position information and the predicted position information and the first AI model is deployed on the network side device, using the historical position information and the predicted position information as an input of the first AI model so as to output first position prediction information, and determining the first position prediction information as the terminal positioning information;

in a case that the second information comprises the third positioning measurement information and the second AI model is deployed on the network side device, using the third positioning measurement information as an input of the second AI model so as to output second position prediction information, and determining the second position prediction information as the terminal positioning information; and

in a case that the second information comprises the historical position information, the predicted position information and the third positioning measurement information and both the first AI model and the second AI model are deployed on the network side device, performing fusion processing on the first position prediction information and the second position prediction information to obtain the terminal positioning information.

25. The method according to claim 24, wherein a fusion processing manner in which the network side device performs fusion processing on the first position prediction information and the second position prediction information is determined according to at least one of the following:

movement state information of the terminal;
historical track information of the terminal; and
demand information of the terminal for positioning accuracy.

26. The method according to claim 18, wherein before the step of receiving the second information, the method further comprises at least one of the following:

sending, by the network side device, a first request to the terminal;
wherein the first request is used for requesting the terminal for reporting at least one of the first position information determined based on the first target AI model, the third positioning measurement information and a type of the third positioning measurement information.

27. The method according to any one of claims 18 to 26, wherein before the step of performing, by the network side device, terminal positioning according to the AI model and the second information, the method further comprises at least one of the following:

receiving, by the network side device, the first identifier reported by the terminal; and
receiving, by the network side device, a terminal calculation capacity sent by the terminal.

28. The method according to claim 27, wherein the method further comprises:

determining, by the network side device, an AI model deployment manner according to the terminal calculation capacity in a case that the network side device receives the terminal calculation capacity; and
sending, by the network side device, fourth information to the terminal, wherein the fourth information at least carries information related to the AI model deployment manners.

29. The method according to claim 27, wherein the AI model deployment manners comprise any one of the following:

the first AI model being deployed on the terminal, and the second AI model being deployed on the network side device;
both the first AI model and the second AI model being deployed on the network side device;
the third AI model being deployed on the terminal, and the second AI model being deployed on the network side device;
both the third AI model and the second AI model being deployed on the network side device; and
the first AI model, the second AI model and the third AI model being deployed on the network side device;
wherein the first AI model is used for obtaining the predicted position information according to the historical position information;
the second AI model is used for determining the current position information according to the first positioning measurement information; and
the third AI model is used for determining a channel characteristic according to the second positioning measurement information.

30. The method according to claim 28, wherein the fourth information comprises at least one of the following:

a fifth identifier, which is used for identifying the AI model deployment manner;
a second timestamp, which is determined time of the AI model deployment manner;
time synchronization information, which is used for ensuring that the AI models deployed on the terminal and the network side device share the same timestamp; and
AI model related information corresponding to the AI model deployment manner.

31. The method according to claim 29, wherein the AI model related information comprises at least one of the following:

model structure information;
model parameter information;
a model data processing manner;
a model run cycle; and
a model updating cycle.

32. A positioning apparatus, comprising:

an executive module, configured to determine and/or report second information according to first information;
wherein the first information comprises a first positioning reference signal and/or a first target AI model, and the second information is used for a network side device to perform terminal positioning.

33. A positioning apparatus, comprising:

a transmission module, configured to receive second information sent by a terminal; and
a positioning module, configured to perform terminal positioning according to a second target AI model and the second information.

34. A terminal, comprising a processor, a memory, and a program or instruction stored on the memory and executable on the processor, the program or instruction, when executed by the processor, implementing steps of the positioning method according to any one of claims 1 to 16.

35. A network side device, comprising a processor, a memory, and a program or instruction stored on the memory and executable on the processor, the program or instruction, when executed by the processor, implementing steps of the positioning method according to any one of claims 17 to 31.

36. A readable storage medium, storing a program or instruction, the program or instruction, when executed by a processor, implementing steps of the positioning method according to any one of claims 1 to 16, or implementing steps of the positioning method according to any one of claims 17 to 31.

FIG. 1

200

S210

Determine and/or report, by a terminal, second information according to first information

FIG. 2

300

S310

Receive, by a terminal, a first request sent by a network side device

S320

Determine and/or report, by the terminal, second information according to first information

S330

Receive, by the terminal, terminal positioning information sent by the network side device

FIG. 3a

| Terminal | Service base station | Core network device |

S341

S342

S343

S344

S345

S346

S347

S348

S349

FIG. 3b

400

S410

Receive, by a network side device, second information sent by a terminal

S420

Perform, by the network side device, terminal positioning according to a second target AI model and the second information

FIG. 4

500

Executive module

510

FIG. 5

600

FIG. 6

700

FIG. 7

FIG. 8

## INTERNATIONAL SEARCH REPORT

| | |
|---|---|
| | International application No. |
| | **PCT/CN2022/125210** |

### A. CLASSIFICATION OF SUBJECT MATTER

H04W 16/22(2009.01)i; H04W 64/00(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, WPI, EPODOC, CNKI, IEEE, 3GPP: 人工智能, 人工智慧, 机器学习, AI, AI/ML, ML, 模型, 位置, 定位, 参考信号, RS, 基站, 网络侧, gnb, network, locat+, position, reference signal, model

### C. DOCUMENTS CONSIDERED TO BE RELEVANT

| Category* | Citation of document, with indication, where appropriate, of the relevant passages | Relevant to claim No. |
|---|---|---|
| X | VIVO. "3GPP TSG RAN #93 RP-212011"<br>*Views on study on AIML based air interface enhancement in Rel-18*,<br>06 September 2021 (2021-09-06),<br>pp. 1-23 | 1-12, 17-26, 32-36 |
| Y | VIVO. "3GPP TSG RAN #93 RP-212011"<br>*Views on study on AIML based air interface enhancement in Rel-18*,<br>06 September 2021 (2021-09-06),<br>pp. 1-23 | 13-16, 27-31 |
| Y | WO 2021142609 A1 (GUANGDONG OPPO MOBILE COMMUNICATIONS CO., LTD.) 22<br>July 2021 (2021-07-22)<br>description, page 4, line 11-page 5, line 2 | 13-16, 27-31 |
| A | US 2019072638 A1 (SIRL, INC.) 07 March 2019 (2019-03-07)<br>entire document | 1-36 |
| A | CN 110536231 A (ZTE CORP.) 03 December 2019 (2019-12-03)<br>entire document | 1-36 |
| A | CN 112106126 A (BEAUCHAMP BASTIEN) 18 December 2020 (2020-12-18)<br>entire document | 1-36 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 November 2022** | **28 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/125210** |

| Patent document cited in search report | | | Publication date (day/month/year) | Patent family member(s) | | | Publication date (day/month/year) |
| --- | --- | --- | --- | --- | --- | --- | --- |
| WO | 2021142609 | A1 | 22 July 2021 | EP | 4087343 | A1 | 09 November 2022 |
| | | | | US | 2022342713 | A1 | 27 October 2022 |
| | | | | CN | 114930945 | A | 19 August 2022 |
| US | 2019072638 | A1 | 07 March 2019 | None | | | |
| CN | 110536231 | A | 03 December 2019 | WO | 2020238471 | A1 | 03 December 2020 |
| | | | | US | 2022231741 | A1 | 21 July 2022 |
| | | | | EP | 3979669 | A1 | 06 April 2022 |
| CN | 112106126 | A | 18 December 2020 | IL | 276736 | A | 30 September 2020 |
| | | | | KR | 20200111261 | A | 28 September 2020 |
| | | | | WO | 2019213763 | A1 | 14 November 2019 |
| | | | | US | 2021183249 | A1 | 17 June 2021 |
| | | | | US | 2021287547 | A1 | 16 September 2021 |
| | | | | EP | 3791376 | A1 | 17 March 2021 |
| | | | | DE | 112019000057 | T5 | 20 February 2020 |
| | | | | JP | 2021510857 | A | 30 April 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111205578